(19) Europäisches Patentamt / European Patent Office / Office européen des brevets

(11) **EP 3 267 676 A1**

(12) **EUROPEAN PATENT APPLICATION**
published in accordance with Art. 153(4) EPC

(43) Date of publication:
**10.01.2018 Bulletin 2018/02**

(21) Application number: **16758584.3**

(22) Date of filing: **27.01.2016**

(51) Int Cl.:
**H04N 5/232** (2006.01)   **G06T 3/40** (2006.01)
**H04N 1/387** (2006.01)   **H04N 5/238** (2006.01)
**H04N 5/225** (2006.01)   **H04N 1/393** (2006.01)

(86) International application number:
**PCT/JP2016/000413**

(87) International publication number:
**WO 2016/139883 (09.09.2016 Gazette 2016/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.03.2015 JP 2015040747**

(71) Applicant: **Panasonic Intellectual Property Management Co., Ltd.**
**Osaka-shi, Osaka 540-6207 (JP)**

(72) Inventors:
• **IMAGAWA, Taro**
  **Osaka-shi, Osaka 540-6207 (JP)**
• **KUSAKA, Hiroya**
  **Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(54) **SUPER-RESOLUTION PROCESSING METHOD, SUPER-RESOLUTION PROCESSING DEVICE, AND SUPER-RESOLUTION PROCESSING SYSTEM**

(57)   A super-resolution processing method for increasing a resolution of a captured image includes: irradiating a subject with a patterned light beam having a spatiotemporal resolution higher than a spatiotemporal resolution of the captured image, the spatiotemporal resolution being at least one of spatial resolution and temporal resolution; generating the captured image by capturing an image of the subject irradiated with the patterned light beam; and generating a high-resolution image having a spatiotemporal resolution higher than the spatiotemporal resolution of the captured image, using the captured image.

FIG. 6

```
                Start
                  |
   Irradiate subject with patterned      S10
   light beams and perform image
   capturing
                  |
   Detect irradiated region             S12
   in captured image
                  |
   Increase resolution of image         S14
   of irradiated region
                  |
   Output high-resolution image         S16
                  |
                 End
```

EP 3 267 676 A1

## Description

[Technical Field]

The present disclosure relates to a super-resolution processing method, a super-resolution processing apparatus, and a super-resolution processing system.

[Background Art]

Non Patent Literature (NPL) 1 discloses a microscope which generates a high-resolution image from a plurality of images obtained by changing the imaging position through a change in the position of illumination lighting.

[Citation List]

[Non Patent Literature]

[NPL 1] Guoan Zhenga, et al., "The ePetri dish, an on-chip cell imaging platform based on subpixel perspective sweeping microscopy (SPSM)", Proceedings of the National Academy of Sciences, vol. 108, no. 41, 16889-16894, 2011
[NPL 2] S. Farsiu, D. Robinson, M. Elad, and P. Milanfar, "Fast and Robust Multi-frame Super-resolution", IEEE Transactions on Image Processing, vol. 13, no. 10, pp. 1327-1344, October 2004

[Summary of Invention]

[Technical Problem]

The present disclosure provides a super-resolution processing method, a super-resolution processing apparatus, and a super-resolution processing system which can generate an image having a high spatiotemporal resolution from a captured image having a low spatiotemporal resolution.

[Solution to Problem]

In order to solve the above problem, a super-resolution processing method according to the present disclosure is a super-resolution processing method for increasing a resolution of a captured image and includes (i) irradiating a subject with a patterned light beam having a spatiotemporal resolution higher than a spatiotemporal resolution of the captured image, the spatiotemporal resolution being at least one of spatial resolution and temporal resolution, (ii) generating the captured image by capturing an image of the subject irradiated with the patterned light beam, and (iii) generating a high-resolution image having a spatiotemporal resolution higher than the spatiotemporal resolution of the captured image, using the captured image.

[Advantageous Effects of Invention]

According to the present disclosure, an image having a high spatiotemporal resolution can be generated from a captured image having a low spatiotemporal resolution.

[Brief Description of Drawings]

[FIG. 1]

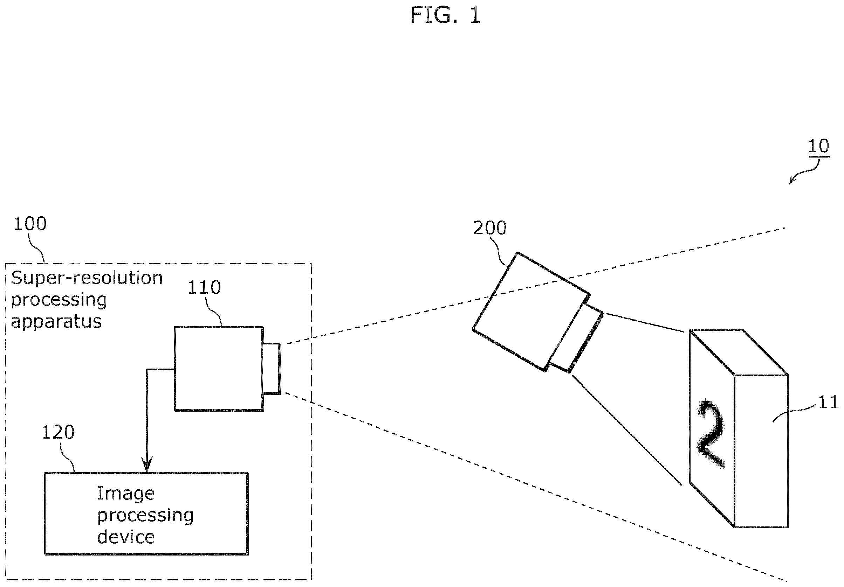

FIG. 1 is a schematic diagram illustrating a super-resolution processing system according to Embodiment 1.
[FIG. 2]

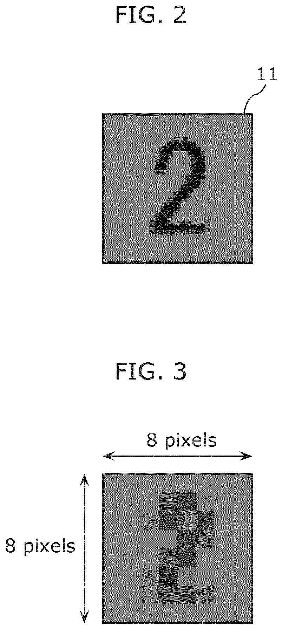

FIG. 2 illustrates a subject according to Embodiment 1.
[FIG. 3]
FIG. 3 illustrates a captured image generated by capturing an image of the subject illustrated in FIG. 2 by a conventional method.

[FIG. 4]

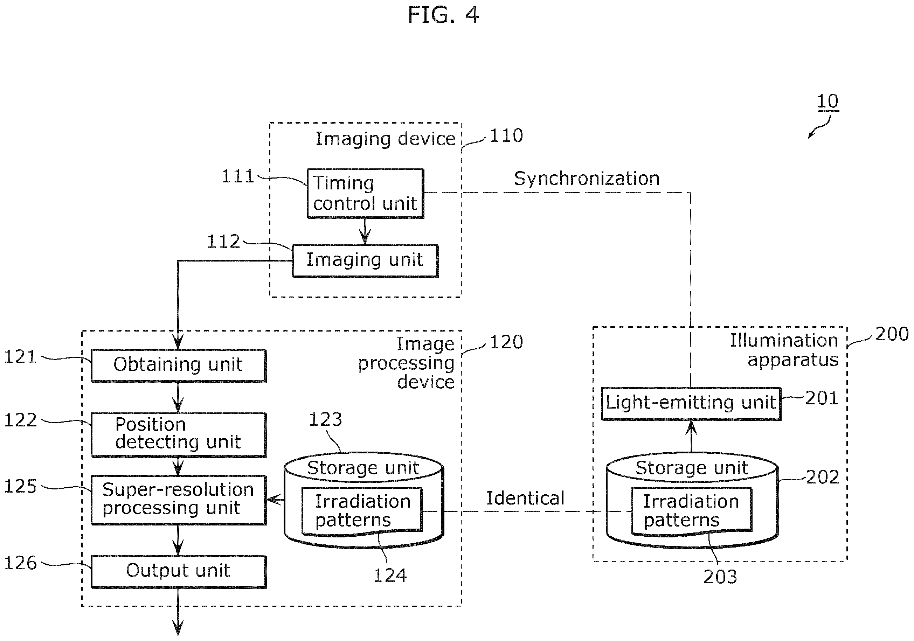

FIG. 4 is a block diagram illustrating a functional configuration of a super-resolution processing system according to Embodiment 1.

[FIG. 5]

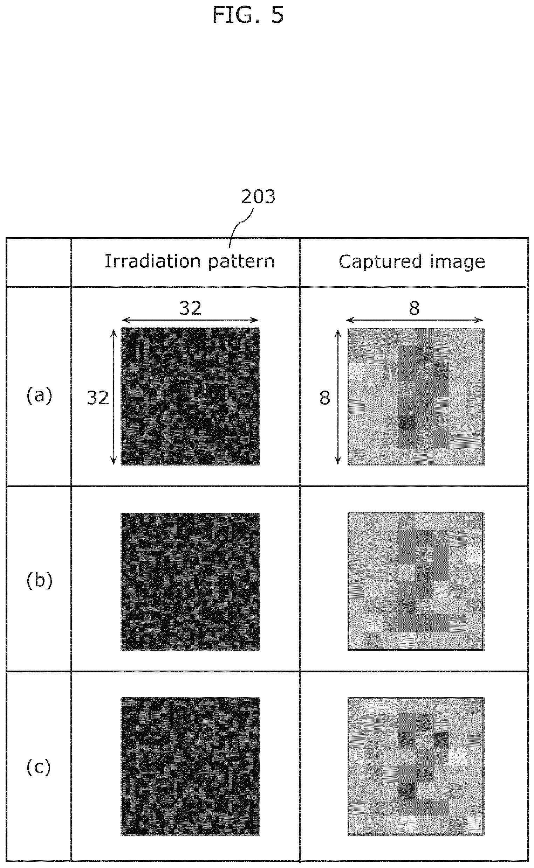

FIG. 5 illustrates irradiation patterns of patterned light beams and captured images according to Embodiment 1.

[FIG. 6]

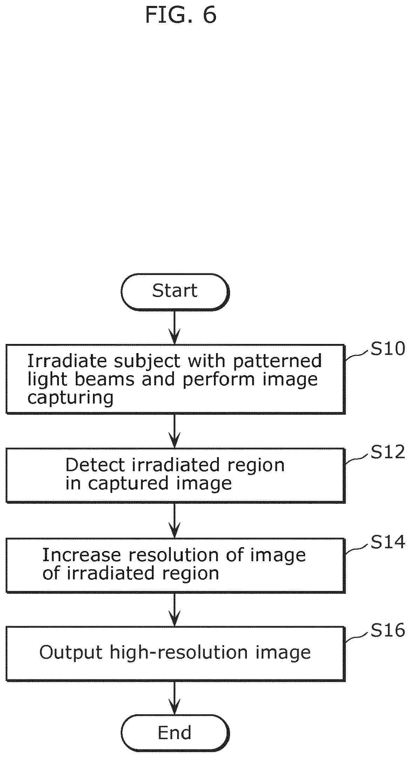

FIG. 6 is a flow chart illustrating an operation of a super-resolution processing system (super-resolution processing method) according to Embodiment 1.

[FIG. 7]

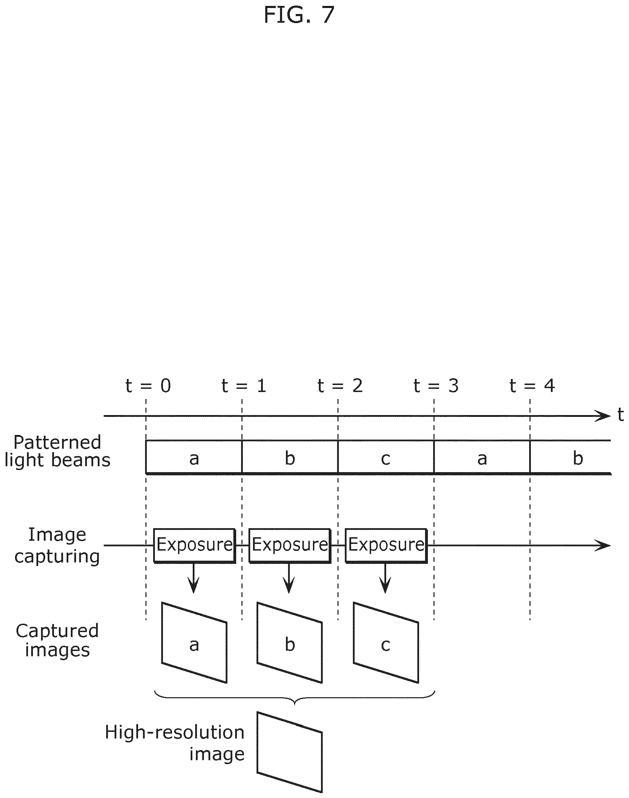

FIG. 7 illustrates timing of irradiation of a subject with patterned light beams and image capturing according to Embodiment 1.

[FIG. 8A]

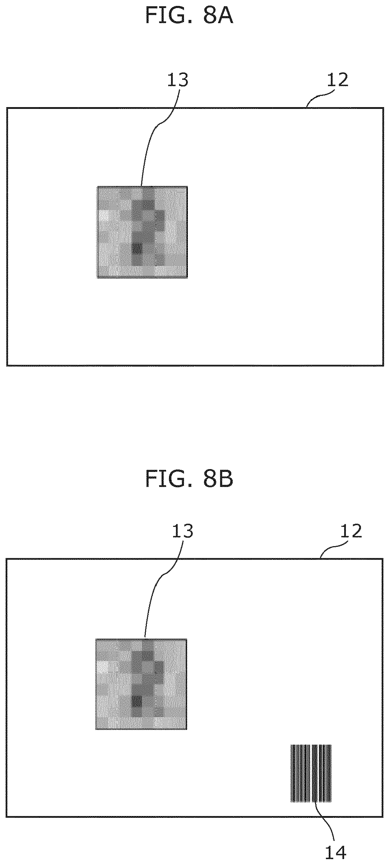

FIG. 8A illustrates a captured image according to Embodiment 1.

[FIG. 8B]
FIG. 8B illustrates a captured image on which region detection according to Embodiment 1 is performed.

[FIG. 9]

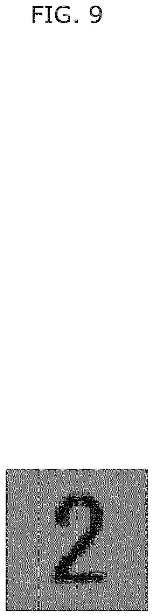

FIG. 9 illustrates a high-resolution image according to Embodiment 1.

[FIG. 10]

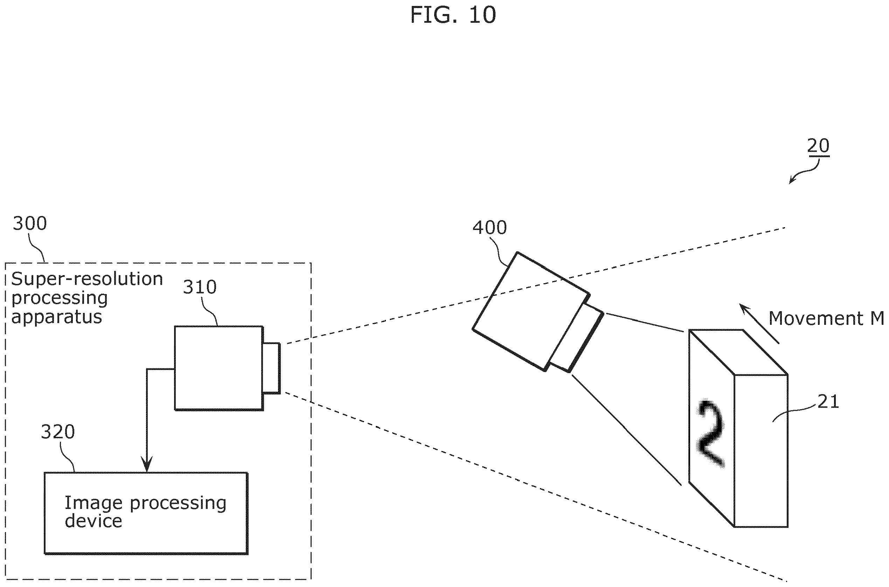

FIG. 10 is a schematic diagram illustrating a super-resolution processing system according to Embodiment 2.

[FIG. 11]

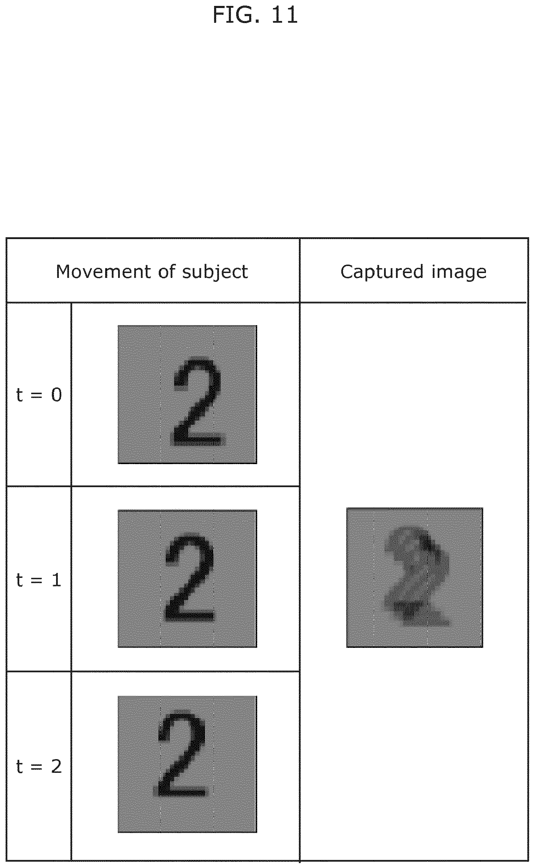

FIG. 11 illustrates movement of a subject illustrated in FIG. 10, and a captured image generated by capturing an image of the subject according to a conventional method.

[FIG. 12]

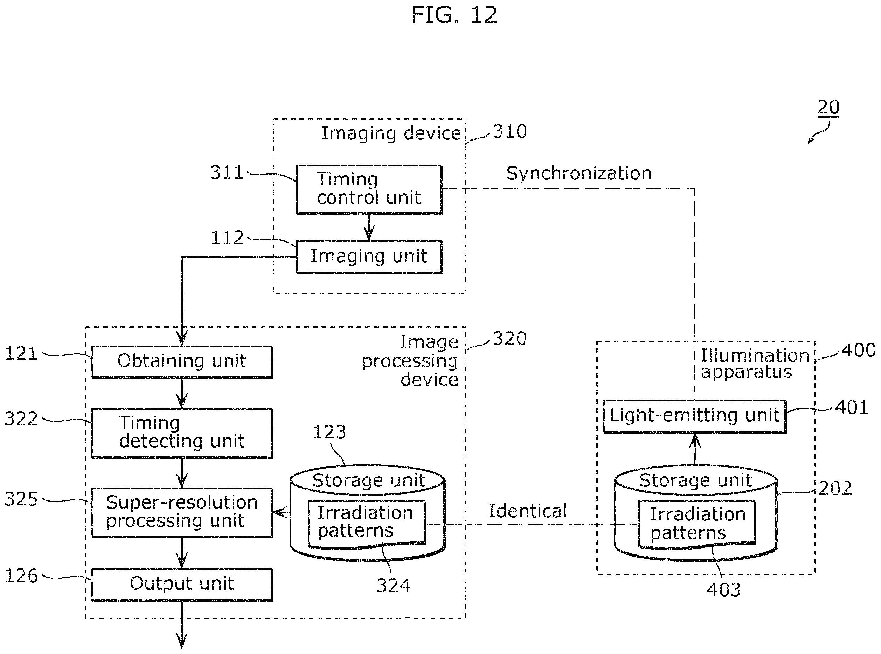

FIG. 12 is a block diagram illustrating a functional configuration of a super-resolution processing system according to Embodiment 2.

[FIG. 13]

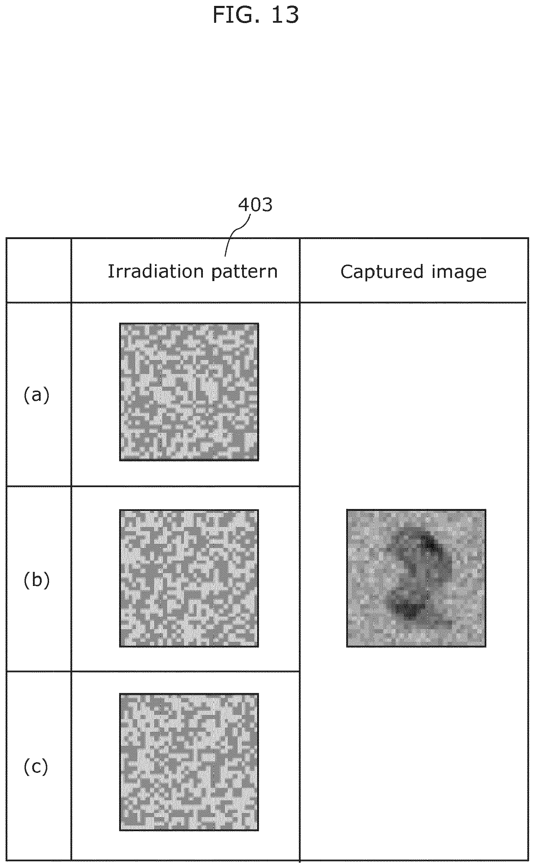

FIG. 13 illustrates irradiation patterns of patterned light beams and a captured image according to Embodiment 2.

[FIG. 14]

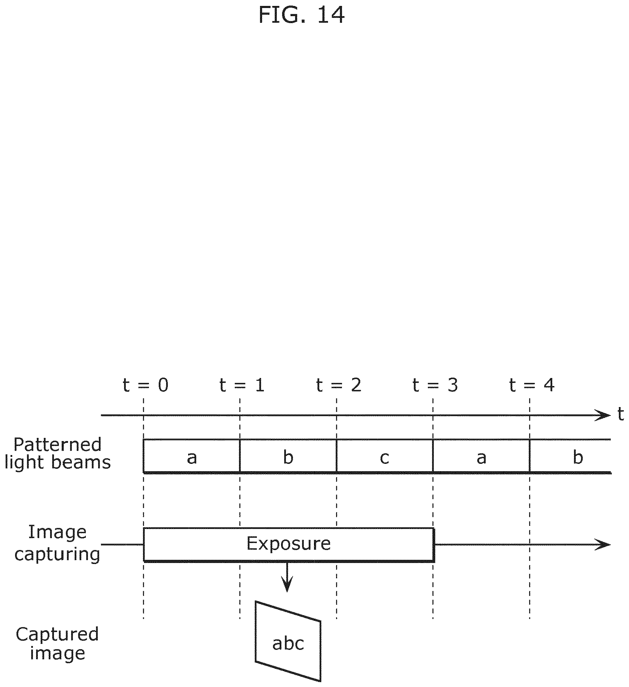

FIG. 14 illustrates timing of irradiation of a subject with patterned light beams and image capturing according to Embodiment 2.

[FIG. 15]

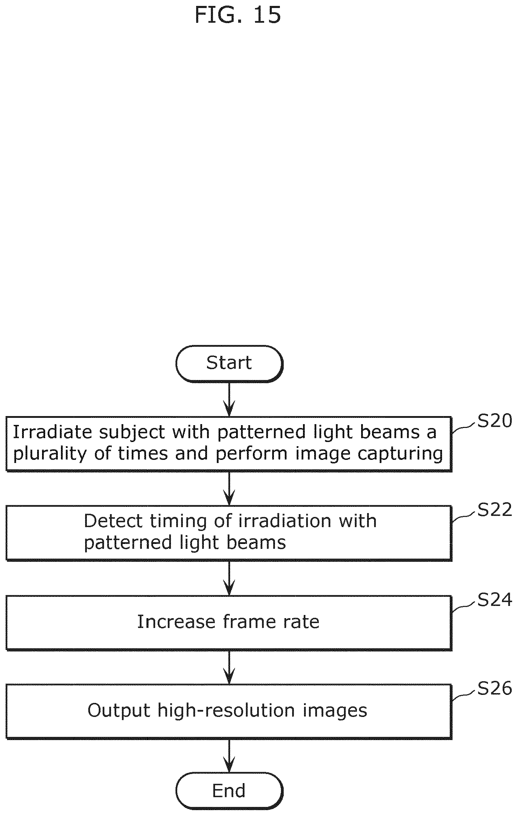

FIG. 15 is a flow chart illustrating an operation of a super-resolution processing system (super-resolution processing method) according to Embodiment 2.

[FIG. 16]

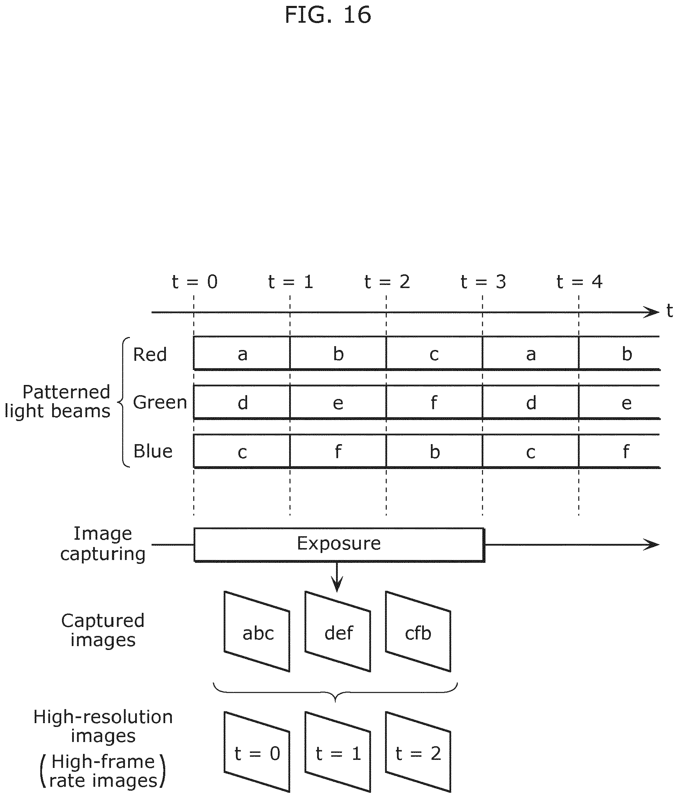

FIG. 16 illustrates timing of irradiation of a subject with patterned light beams and image capturing according to Embodiment 2.

[FIG. 17]

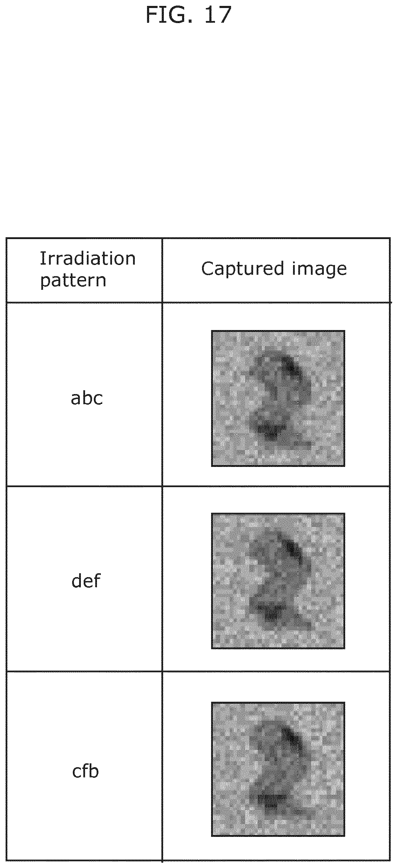

FIG. 17 illustrates an example of irradiation patterns of patterned light beams and captured images according to Embodiment 2.

[FIG. 18]

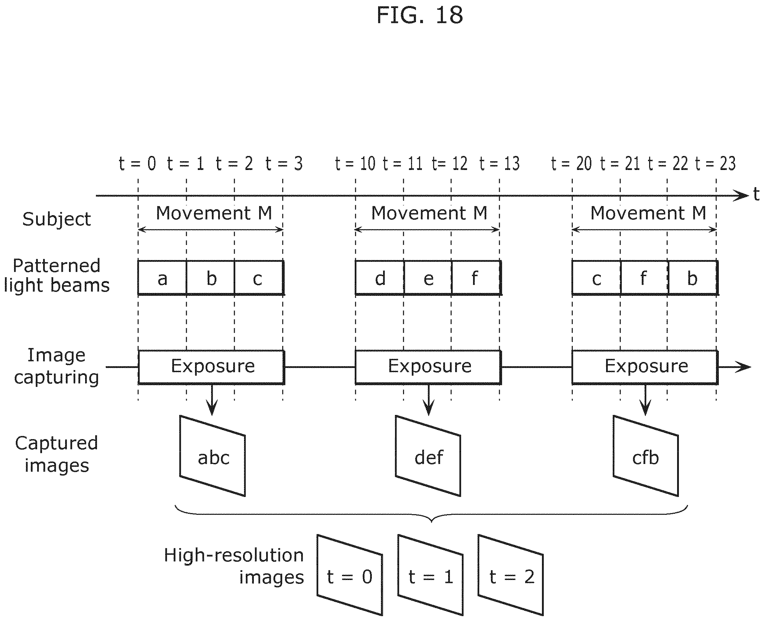

FIG. 18 illustrates another example of timing of irradiation of a subject with patterned light beams and image capturing according to Embodiment 2.

[FIG. 19]

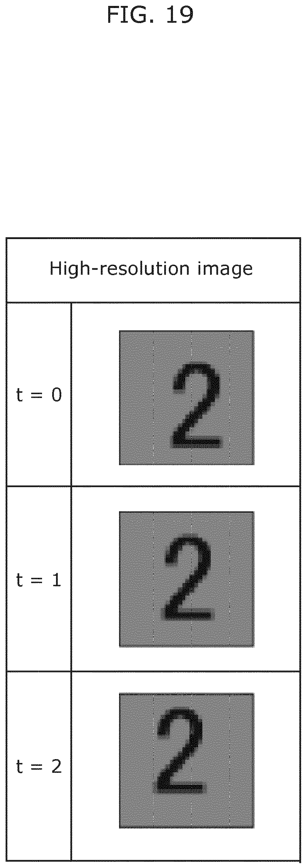

FIG. 19 illustrates high-resolution images according to Embodiment 2.

[Description of Embodiments]

Hereinafter, embodiments will be described in detail with reference to the drawings as necessary. It should be noted, however, that overly detailed descriptions may be omitted. For example, descriptions of well-known aspects or duplicate descriptions of essentially the same elements may be omitted. This is to avoid unnecessary redundancy and make the following description easier for those skilled in the art to understand.

It should be noted that the inventors provide the accompanying drawings and the following description not to limit the subject matters recited in the claims, but to aid those skilled in the art to adequately understand the present disclosure.

It should also be noted that each figure is a schematic diagram and not necessarily a precise illustration. Furthermore, in the figures, the same structural elements are given the same reference signs.

[Embodiment 1]

Hereinafter, Embodiment 1 will be described with reference to FIG. 1 through FIG. 9.

[1-1. Configuration]

[1-1-1. Outline]

FIG. 1 illustrates a configuration of a super-resolution processing system 10 according to the present embodiment. FIG. 2 illustrates a subject 11 according to the present embodiment. FIG. 3 illustrates a captured image generated by capturing an image of the subject 11 illustrated in FIG. 2 by a conventional method.
For example, FIG. 3 illustrates the case where an image of the subject 11 is captured in a region of 8 pixels × 8 pixels. In the example illustrated in FIG. 3, the captured image is unclear because the number of pixels of the image sensor (imaging device 110) is small.
The super-resolution processing system 10 according to the present embodiment increases the resolution of the unclear captured image as illustrated in FIG. 3, for example. Specifically, the super-resolution processing system 10 generates a captured image by capturing an image of the subject 11, and generates a high-resolution image by performing super-resolution processing on the captured image generated.
As illustrated in FIG. 1, the super-resolution processing system 10 includes a super-resolution processing apparatus 100 and an illumination apparatus 200. The super-resolution processing apparatus 100 includes an imaging device 110 and an image processing device 120.
The illumination apparatus 200 irradiates the subject 11 with a patterned light beam having a spatiotemporal resolution higher than the spatiotemporal resolution of a captured image (that is to say, the illumination apparatus 200 projects the patterned light beam to the subject 11). Spatiotemporal resolution is at least one of spatial resolution and temporal resolution.
The imaging device 110 is an imaging unit which generates a captured image by capturing an image of the subject 11 irradiated with a patterned light beam.
The image processing device 120 is an image processing unit which performs super-resolution processing on a captured image. That is to say, the image processing device 120 generates, using a captured image, a high-resolution image having a spatiotemporal resolution higher than the spatiotemporal resolution of the captured image.
Hereinafter, detailed configurations of the imaging device 110, the image processing device 120, and the illumination apparatus 200 will be described with reference to FIG. 4. FIG. 4 is a block diagram illustrating a functional configuration of the super-resolution processing system 10 according to the present embodiment.

[1-1-2. Illumination apparatus]

The illumination apparatus 200 is, for example, a surface-type patterned illumination apparatus such as a projector. In the present embodiment, the illumination apparatus 200 is disposed at a position close to the subject 11 as illustrated in FIG. 1. For example, the illumination apparatus 200 is disposed closer to the subject 11 than the imaging device 110 is.
As illustrated in FIG. 4, the illumination apparatus 200 includes a light-emitting unit 201 and a storage unit 202.
The light-emitting unit 201 emits a patterned light beam. In the present embodiment, the light-emitting unit 201 emits a plurality of patterned light beams which are mutually different in light and dark pattern. Specifically, the light-emitting unit 201 emits a plurality of patterned light beams at mutually different timing. The light-emitting unit 201 reads an irradiation pattern 203 stored in the storage unit 202, and emits a patterned light beam according to a light and dark pattern indicated by the irradiation pattern 203 which has been read.
The light and dark pattern is formed in an irradiated region which is a region irradiated with the patterned light beam. The irradiated region is a region on the subject irradiated with the patterned light beam. The light and dark pattern is formed according to differences in the amount of light per unit region. A unit region is the smallest unit of the light and dark pattern of the patterned light beam. The fineness of the light and dark pattern in the irradiated region, that is, the number of unit regions, corresponds to the spatial resolution of the patterned light beam. Moreover, the number of times of irradiation with a patterned light beam in a given period corresponds to the temporal resolution of the patterned light beam.
The light-emitting unit 201 includes, for example, a plurality of light-emitting pixels that are two-dimensionally arranged, and a driver circuit which controls lighting of the plurality of light-emitting pixels. The light-emitting unit 201 irradiates the subject with a patterned light beam by causing each of the plurality of light-emitting pixels to emit light in high luminance (light) or low luminance (dark). It should be noted that instead of causing a certain light-emitting pixel to emit light in low luminance, the light-emitting unit 201 may set the luminance of the certain light-emitting pixel to 0, that is, turn the light-emitting pixel off. Moreover, the light-emitting unit 201 may cause each of the light-emitting pixels to emit light at a luminance value selected from among three or more luminance values.

In the present embodiment, the light-emitting unit 201 emits a patterned light beam such that the irradiated region has a substantially rectangular shape. For example, the light-emitting unit 201 includes a plurality of light-emitting pixels arranged in m rows and n columns, and forms an irradiated region having a substantially rectangular shape on the subject 11 by causing the plurality of light-emitting pixels to emit light. In this case, the irradiated region includes m rows and n columns of unit regions. It should be noted that m and n are natural numbers.

The light-emitting unit 201 is implemented by, for example, a light-emitting element such as a light-emitting diode (LED) or an organic electroluminescent (EL) element, and a driver circuit which drives the light-emitting element.

The storage unit 202 is a storage device for storing irradiation patterns 203. For example, the storage unit 202 is a semiconductor memory such as a hard disk drive (HDD) or a flash memory.

Each of the irradiation patterns 203 is information indicating a light and dark pattern. For example, each irradiation pattern 203 is information indicating the respective luminance values of the plurality of light-emitting pixels included in the light-emitting unit 201. Alternatively, each irradiation pattern 203 may be information indicating light-emitting pixels which are to be turned on among the light-emitting pixels included in the light-emitting unit 201. The light-emitting unit 201 turns on the light-emitting pixels indicated by an irradiation pattern 203 at a certain luminance and does not turn on the other light-emitting pixels, thereby emitting a patterned light beam having a light and dark pattern.

FIG. 5 illustrates irradiation patterns 203 of patterned light beams and captured images according to the present embodiment. In the fields of the irradiation patterns 203 illustrated in FIG. 5, the black parts represent dark regions in which the amount of light is small or zero, whereas the grey parts represent light regions in which the amount of light is large.

As illustrated in FIG. 5, each of the irradiation patterns 203 has light regions and dark regions that are two-dimensionally arranged, with a unit region of a predetermined shape being the smallest unit. The predetermined shape is a substantially square shape, for example. In the present embodiment, the spatial resolutions of patterned light beams are higher than the spatial resolutions of captured images. As illustrated in FIG. 5, the size of the unit region is a sixteenth of the pixel size of the captured images (each of the length and the breadth of the unit region is a fourth of the length and the breadth of the captured images).

In the present embodiment, the storage unit 202 stores a plurality of irradiation patterns 203 which are mutually different in light and dark pattern. For example, as illustrated in (a) through (c) in FIG. 5, mutually different three irradiation patterns 203 are stored.

It should be noted that the frequency components of each patterned light beam are distributed in substantially equal proportions. Random patterned light beams, which are patterned light beams in which light and dark regions are randomly arranged, satisfy this condition. In other words, patterned light beams have substantially flat frequency characteristics. Specifically, unlike light beams having a pattern such as a checkered pattern (a pattern with regularity), the patterned light beams are not dominated by a particular frequency.

It should be noted that patterned light beams having a pattern in which light and dark regions are regularly arranged, such as checkered pattern, may be used as the patterned light beams. For example, patterned light beams having substantially flat frequency characteristics may be achieved by combining checkered irradiation patterns having different spatial frequencies (i.e., resolutions).

[1-1-3. Imaging device]

The imaging device 110 is a camera such as a monitoring camera or a fixed-point camera. In the present embodiment, the imaging device 110 is disposed at a position far from the subject 11 as illustrated in FIG. 1. For example, the imaging device 110 is disposed farther from the subject 11 than the illumination apparatus 200 is.

As illustrated in FIG. 4, the imaging device 110 includes a timing control unit 111 and an imaging unit 112.

The timing control unit 111 includes, for example, a nonvolatile memory in which a program is stored, a volatile memory which is a temporary storage region for running a program, an input-output port, and a processor which runs a program. The timing control unit 111 controls timing of image capturing performed by the imaging unit 112. Specifically, the timing control unit 111 causes the imaging unit 112 to perform image capturing in synchronization with emission of a patterned light beam by the light-emitting unit 201 of the illumination apparatus 200.

The imaging unit 112 includes an optical system such as an image sensor and a lens. The imaging unit 112 generates a captured image by capturing an image of the subject 11 irradiated with a patterned light beam.

In the present embodiment, the imaging unit 112 generates a plurality of captured images corresponding to a plurality of patterned light beams by capturing, in synchronization with the irradiation of the subject 11 with the plurality of patterned light beams, a plurality of images of the subject 11 irradiated with each of the plurality of patterned light beams. That is to say, the temporal resolutions of the patterned light beams are the same as the temporal resolutions (frame rates) of the captured images. For example, as illustrated in FIG. 5, three captured images are generated in synchronization with irradiation of the subject 11 with three patterned light beams each having a different one of the three irradiation patterns 203.

[1-1-4. Image processing device]

The image processing device 120 increases the resolution of a captured image generated through the image capturing performed by the imaging device 110. The image processing device 120 is implemented by, for example, various integrated circuits such as a system LSI. Specifically, the image processing device 120 includes, for example, a nonvolatile memory in which a program is stored, a volatile memory which is a temporary storage region for running a program, an input-output port, and a processor which runs a program.

As illustrated in FIG. 4, the image processing device 120 includes an obtaining unit 121, a position detecting unit 122, a storage unit 123, a super-resolution processing unit 125, and an output unit 126. The functions of the obtaining unit 121, the position detecting unit 122, the storage unit 123, the super-resolution processing unit 125, and the output unit 126 are performed by, for example, a nonvolatile memory, a volatile memory, an input-output port, and a processor.

The obtaining unit 121 obtains a captured image generated by the imaging device 110.

The position detecting unit 122 detects, in the captured image obtained by the obtaining unit 121, an irradiated region irradiated with a patterned light beam, at accuracy higher than the spatial resolution of the captured image (sub-pixel accuracy). Specifically, the position detecting unit 122 detects the irradiated region in the captured image at the same accuracy as the spatial resolution of the patterned light beam. The position detecting unit 122 detects the irradiated region in the captured image, so as to detect a corresponding relationship between unit regions included in the irradiated region and pixels of the captured image. The details of the processing will be described later.

The storage unit 123 is a storage device for storing irradiation patterns 124. The storage unit 123 is an HDD or a flash memory, for example. The irradiation patterns 124 are identical to the irradiation patterns 203 stored in the storage unit 202 of the illumination apparatus 200.

The super-resolution processing unit 125 generates a high-resolution image by performing super-resolution processing on a captured image. In the present embodiment, the super-resolution processing unit 125 generates a high-resolution image using pixels of the captured image which are included in the irradiated region detected by the position detecting unit 122.

Specifically, the super-resolution processing unit 125 generates a high-resolution image by calculating, on a per unit region basis, a pixel value of the high-resolution image based on a pixel value of a pixel including a unit region of the irradiated region of each of a plurality of captured images. That is to say, a pixel of a high-resolution image corresponds to a unit region of a patterned light beam. In other words, the spatial resolution of a high-resolution image coincides with the spatial resolution of a patterned light beam.

Focusing on one pixel, the pixel (focused pixel) includes a plurality of unit regions. For each of a plurality of captured images, the focused pixel has a different pixel value due to differences in the light and dark patterns of the unit regions included in the focused pixel. That is to say, the pixel value of the focused pixel in each of the plurality of captured images implicitly includes information on the light and dark pattern of the patterned light beam emitted when generating the captured image. Therefore, a high-resolution image can be generated by evaluating, on a per unit region basis, the likelihood (validity measure) of the generated high-resolution image as a natural image, using the pixel value of a pixel including the unit region in each of the plurality of captured images.

The super-resolution processing unit 125 can adopt common super-resolution processing. Specifically, the super-resolution processing unit 125 uses an image generation method disclosed in Non Patent Literature 2, for example. The details of the processing will be described later.

The output unit 126 outputs the high-resolution image generated by the super-resolution processing unit 125. For example, the output unit 126 outputs the high-resolution image to an external display, memory, or the like.

[1-2. Operation]

FIG. 6 is a flow chart illustrating an operation of the super-resolution processing system 10 (super-resolution processing method) according to the present embodiment.

First, the subject 11 is irradiated with patterned light beams and image capturing is performed (S10). Specifically, the illumination apparatus 200 irradiates the subject 11 with a plurality of mutually different patterned light beams, and the imaging device 110 generates captured images of the subject 11 irradiated with each of the plurality of patterned light beams, by performing image capturing in synchronization with the irradiation of the subject 11 with each of the plurality of patterned light beams.

FIG. 7 illustrates timing of irradiation of the subject 11 with patterned light beams and image capturing according to the present embodiment. The illumination apparatus 200, for example, cyclically emits patterned light beams having three irradiation patterns "a", "b", and "c". It should be noted that the three irradiation patterns "a", "b", and "c" are mutually different in light and dark pattern, and are, for example, patterns illustrated in (a) through (c) in FIG. 5.

The imaging device 110 generates captured images by capturing images of the subject 11 in synchronization with the emission of the patterned light beams. For example, as illustrated in FIG. 7, three captured images corresponding to the three irradiation patterns "a", "b", and "c" are generated. The three captured images are, for example, the captured images illustrated in (a) through (c) in FIG. 5.

Although the size of the unit region in the example here is that the length and the breath of the unit region are a fourth of the length and the breath of pixels of the captured images, the size of the unit region is not limited to this example. The unit region may have such a size that the length and the breath of the unit region are larger or smaller than a fourth of the length and the breath of pixels of the captured images. Furthermore, the ratio of the length and the breath may differ.

Moreover, although the number of captured images is preferably two to the power of the ratio of the spatial resolution of patterned light beams and the spatial resolution of captured images, the resolution of the captured images can be increased even with a less number of captured images. For example, even with one captured image, the resolution of the captured image can be increased by using predetermined information. It should be noted that a large number of captured images is preferable in order to reduce the impact of noise.

Next, the position detecting unit 122 detects an irradiated region in a captured image (S12). Specifically, the position detecting unit 122 detects an irradiated region in each of a plurality of captured images. More specifically, the position detecting unit 122 detects an irradiated region at sub-pixel accuracy. For example, the sub-pixel accuracy is the same accuracy as the spatial resolution of patterned light beams.

FIG. 8A illustrates a captured image 12 according to the present embodiment. As illustrated in FIG. 8A, the captured image 12 includes an irradiated region 13 irradiated with a patterned illumination beam.

It should be noted that a positional relationship between a captured image generated by the imaging device 110 and the irradiated region irradiated by the illumination apparatus 200 is preferably fixed at sub-pixel accuracy. However, the orientation of the imaging device 110 may change due to an external influence. In this case, degradation of the image quality of the high-resolution image can be reduced by detecting the irradiated region 13.

In the present embodiment, the position detecting unit 122 detects the irradiated region 13 by detecting, from the captured image 12, a reference object whose position relative to the irradiated region 13 is fixed. The reference object is, for example, a mark provided in advance in close vicinity of the subject 11 so as to be included in the captured image 12.

FIG. 8B illustrates the captured image 12 on which the region detection according to the present embodiment is performed. As illustrated in FIG. 8B, the captured image 12 includes a reference object 14.

The reference object 14 is a high-frequency subject known by the image processing device 120. Specifically, the reference object 14 is, for example, a checkered pattern having a pitch finer than the pitch of the pixels of the captured image 12. By associating in advance the phase and the position of a moiré pattern generated in the captured image 12 due to the reference object 14, the position detecting unit 122 can detect the irradiated region 13 by detecting the moiré pattern caused by the reference object 14.

It should be noted that the illumination apparatus 200 may irradiate a region included in the captured image 12 and different from the irradiated region 13 with a high-frequency periodic pattern as the reference object 14. It should be noted that another illumination apparatus different from the illumination apparatus 200 may irradiate the region with the high-frequency periodic pattern as the reference object 14. The position detecting unit 122 detects the irradiated region 13 by detecting a moiré pattern generated in the captured image 12 due to the reference object 14.

Next, the super-resolution processing unit 125 increases the resolution of the image of the irradiated region 13 (S14).

For example, the super-resolution processing unit 125 calculates an image f which minimizes a function E(f) shown in (Equation 1) below, so as to generate the calculated image f as a high-resolution image. It should be noted that the irradiation patterns 203 with which the subject 11 is irradiated and the irradiation patterns 124 used by the super-resolution processing unit 125 are identical. That is to say, the super-resolution processing unit 125 can use, as known information, the irradiation patterns 203 with which the subject 11 is irradiated.

[Math. 1]

(Equation 1)

$$E(f) = \sum_{k,x',y'} \left| (\downarrow 4) [b(x,y) \otimes \{f(x,y)(L_k(x,y) + L_0)\}] - g_k(x',y') \right|^2 + \lambda \sum_{x,y} |\Delta f(x,y)|$$

In (Equation 1), x and y are coordinates representing two-dimensional positions of a high-resolution image. x' and y' are coordinates representing two-dimensional positions of a captured image. $f(x, y)$ is a high-resolution image to be calculated. $b(x, y)$ is a point spread function (PSF) representing blur caused by image capturing.

$L_k(x, y)$ is an irradiation pattern 124 (that is, an irradiation pattern 203). k is a number of an irradiation pattern 124 (that is, a number of a captured image), and is specifically information for identifying (a), (b) or (c) illustrated in FIG. 5. $L_0$ is information which indicates lighting by which the surrounding environment is commonly irradiated. $L_0$ can be obtained by, for example, capturing an image without the illumination apparatus 200 emitting patterned light beams.

$g_k(x', y')$ is a captured image generated when the subject 11 is irradiated with a patterned light beam having an irradiation pattern $L_k$. $\lambda$ is a predetermined constant. $\Delta$ is Laplacian. ($\downarrow 4$) represents sampling performed by thinning out by 1/4. It should be noted that in the present embodiment, the spatial resolution of a high-resolution image (patterned light beam) is that the length and the breath of the high-resolution image are a fourth of the length and the breath of a captured image, and thus the sampling is performed by thinning out by 1/4. The number for the sampling is determined based on a difference in spatial resolution between the high-resolution image and the captured image.

It should be noted that in (Equation 1), the item including $\lambda$ represents a likelihood that a natural image should satisfy. When the generated high-resolution image f includes a large number of noise components, the value of the item including $\lambda$ increases, thereby increasing the value of E(f) too. Accordingly, the smaller the value of the item including $\lambda$ is, the more suitable the generated high-resolution image f is as a natural image and the more natural the generated high-resolution image f becomes.

Next, the output unit 126 outputs the high-resolution image generated by the super-resolution processing unit 125 (S16). FIG. 9 illustrates a high-resolution image according to the present embodiment. As illustrated in FIG. 9, a high-resolution image having a spatial resolution higher than the spatial resolutions of captured images is generated.

[1-3. Advantageous Effects etc.]

As described above, the super-resolution processing method according to the present embodiment is a super-resolution processing method for increasing a resolution of a captured image and includes (i) irradiating the subject 11 with a patterned light beam having a spatiotemporal resolution higher than a spatiotemporal resolution of the captured image, the spatiotemporal resolution being at least one of spatial resolution and temporal resolution, (ii) generating the captured image by capturing an image of the subject 11 irradiated with the patterned light beam, and (iii) generating a high-resolution image having a spatiotemporal resolution higher than the spatiotemporal resolution of the captured image, using the captured image.

With this, an image having a high spatial resolution can be generated from a captured image having a low spatial resolution. For example, an image having a high resolution can be generated even when a low-resolution camera is used.

For example, when an image of a wide region is captured using a monitoring camera or the like, the number of pixels in a certain narrow region in the captured image is small, making the image unclear. In this case, it is possible to increase the resolution of the image of the certain narrow region by capturing an image while irradiating the subject 11 included in the certain narrow region with a patterned light beam of a high resolution.

In the case of performing super-resolution processing using a plurality of captured images under normal lighting, the plurality of captured images need to include aliasing derived from high frequency components of the subject 11 when the imaging sensor of the imaging device 110 performs sampling. With the super-resolution processing method according to the present disclosure, the plurality of captured images need not include aliasing because the high frequency information of the patterned light beams emitted by the illumination apparatus 200 is obtained. Therefore, it is also possible to easily increase the resolution as necessary by increasing the frequency of the patterned light beams from the illumination apparatus 200 or by increasing the variations of image capturing.

For example, in the present embodiment, in (i) above, the subject 11 is irradiated with a plurality of patterned light beams which are mutually different in light and dark pattern.

With this, the resolution of the high-resolution image can be increased by making the light and dark pattern finer, for example.

For example, in the present embodiment, the plurality of patterned light beams have spatial resolutions higher than a spatial resolution of the captured image, and in (ii) above, a plurality of captured images corresponding to the plurality of patterned light beams are generated by capturing, in synchronization with irradiation of the subject 11 with the plurality of patterned light beams, images of the subject 11 irradiated with each of the plurality of patterned light beams.

With this, the image quality of the high-resolution image can be enhanced by increasing the number of captured images, for example.

For example, in the present embodiment, (iii) above includes (a) detecting an irradiated region 13 in each of the plurality of captured images at an accuracy higher than the spatial resolution of the captured image 12, the irradiated region 13 being a region irradiated with a patterned light beam and (b) generating the high-resolution image using pixels included in the irradiated region 13 detected in the captured image 12.

With this, the irradiated region 13 is detected, and thus degradation of the image quality of the high-resolution image can be reduced even when the orientation of the imaging device 110 or the illumination apparatus 200 changes due to an external factor.

For example, in the present embodiment, in (a) above, the irradiated region 13 is detected by detecting, from the captured image 12, a reference object 14 whose position relative to the irradiated region 13 is fixed.

With this, the irradiated region 13 can be accurately detected because the reference object 14 is detected, and thus, degradation of the image quality of the high-resolution image can be reduced.

For example, in the present embodiment, in (a) above, the irradiated region 13 is detected by detecting a moiré pattern generated in the captured image 12 due to the reference object 14.

With this, the irradiated region 13 can be accurately detected by associating in advance the phase and the position of a moiré pattern caused by the reference object 14, for example.

For example, in the present embodiment, in (i) above, a region different from the irradiated region 13 and included in the captured image 12 is also irradiated with a high-frequency periodic pattern as the reference object 14.

With this, the region is irradiated with the periodic pattern as the reference object 14, and thus the image capturing range can be widened as compared to the case where the reference object 14 is fixed.

For example, in the present embodiment, in (b) above, the high-resolution image is generated by calculating, on a per unit region basis, a pixel value of the high-resolution image based on a pixel value of a pixel including a unit region in the irradiated region 13 of each of the plurality of captured images 12, the unit region being a smallest unit of light and dark patterns of the plurality of patterned light beams.

With this, a high-resolution image having a high resolution can be generated from the captured image 12 having a low resolution.

For example, in the present embodiment, the patterned light beam is a random patterned light beam in which light and dark regions are randomly arranged.

With this, the image quality of the high-resolution image can be enhanced.

For example, a super-resolution processing method according to the present embodiment may be a super-resolution processing method which includes generating a high-resolution image having a spatiotemporal resolution higher than a spatiotemporal resolution of the captured image, using the captured image generated by capturing an image of the subject 11 irradiated with a patterned light beam having a spatiotemporal resolution higher than the spatiotemporal resolution of the captured image, the spatiotemporal resolution being at least one of spatial resolution and temporal resolution.

It should be noted that these general or specific aspects may be implemented by a system, a device, an integrated circuit, a computer program, or a computer-readable recording medium such as a CD-ROM, or by any combination of a system, a device, an integrated circuit, a computer program, and a recording medium.

For example, the super-resolution processing apparatus 100 according to the present embodiment is a super-resolution processing apparatus which increases a resolution of a captured image and includes: an imaging device 110 that generates the captured image by capturing an image of the subject 11 irradiated with a patterned light beam having a spatiotemporal resolution higher than a spatiotemporal resolution of the captured image, the spatiotemporal resolution being at least one of spatial resolution and temporal resolution; and an image processing device 120 that generates a high-resolution image having a spatiotemporal resolution higher than the spatiotemporal resolution of the captured image, using the captured image generated by the imaging device 110.

Furthermore, for example, the super-resolution processing apparatus 100 according to the present embodiment may be a super-resolution processing apparatus which increases a resolution of a captured image and includes an image processing unit configured to generate a high-resolution image having a spatiotemporal resolution higher than a spatiotemporal resolution of the captured image, using the captured image generated by capturing an image of a subject irradiated with a patterned light beam having a spatiotemporal resolution higher than the spatiotemporal resolution of the captured image, the spatiotemporal resolution being at least one of spatial resolution and temporal resolution.

For example, the super-resolution processing system 10 according to the present embodiment includes the super-resolution processing apparatus 100 and the illumination apparatus 200 which irradiates the subject 11 with the patterned light beam.

[Embodiment 2]

Hereinafter, Embodiment 2 will be described with reference to FIG. 10 through FIG. 19.

[2-1. Configuration]

[2-1-1. Outline]

FIG. 10 illustrates a configuration of a super-resolution processing system 20 according to the present embodiment. FIG. 11 illustrates movement of a subject 21 illustrated in FIG. 10, and a captured image generated by capturing an image of the subject 21 according to a conventional method.

In the present embodiment, the subject 21 moves. For example, as illustrated in FIG. 10 and FIG. 11, the subject 21 moves diagonally to the upper left. Since the subject 21 moves during the exposure time of a captured image, the subject 21 blurs in the resulting captured image as illustrated in FIG. 11.

The super-resolution processing system 20 according to the present embodiment increases the resolution of a captured image having blur as illustrated in FIG. 11, for example. Specifically, the super-resolution processing system 20 generates a plurality of captured images with less blur by increasing the temporal resolution.

As illustrated in FIG. 10, the super-resolution processing system 20 includes a super-resolution processing apparatus 300 and an illumination apparatus 400. The super-resolution processing apparatus 300 includes an imaging device 310 and an image processing device 320.

The illumination apparatus 400 irradiates the subject 21 with a patterned light beam having a spatiotemporal resolution higher than the spatiotemporal resolution of a captured image. Specifically, the illumination apparatus 400 irradiates the subject 21 with patterned light beams having a temporal resolution higher than the temporal resolution (that is, a frame rate) of the captured image.

The imaging device 310 is an imaging unit which generates a captured image by capturing an image of the subject 21 irradiated with patterned light beams.

The image processing device 320 is an image processing unit which performs super-resolution processing on a captured image. Specifically, the image processing device 320 generates, using captured images, high-resolution images (high-frame rate images) having a temporal resolution higher than the temporal resolution of the captured images.

Hereinafter, detailed configurations of the imaging device 310, the image processing device 320, and the illumination apparatus 400 will be described with reference to FIG. 12. FIG. 12 is a block diagram illustrating a functional configuration of the super-resolution processing system 20 according to the present embodiment. It should be noted that the following description is the same as that of Embodiment 1 except for some aspects that are described in particular.

[2-1-2. Illumination apparatus]

As illustrated in FIG. 12, the illumination apparatus 400 is different from the illumination apparatus 200 according to Embodiment 1 in that the illumination apparatus 400 includes a light-emitting unit 401 instead of the light-emitting unit 201. Furthermore, the storage unit 202 stores irradiation patterns 403 instead of the irradiation patterns 203.

The light-emitting unit 401 emits a plurality of patterned light beams. In the present embodiment, the light-emitting unit 401 emits a plurality of patterned light beams which are mutually different in light and dark pattern, at mutually different timing. Specifically, the light-emitting unit 401 reads an irradiation pattern 403 stored in the storage unit 202, and emits a patterned light beam according to a light and dark pattern indicated by the irradiation pattern 403 which has been read.

FIG. 13 illustrates irradiation patterns 403 of patterned light beams and a captured image according to the present embodiment. In the same manner as in Embodiment 1, each of the irradiation patterns 403 according to the present embodiment has a light region or a dark region for each unit region so that a plurality of light regions and dark regions are two-dimensionally arranged. In the present embodiment, the spatial resolutions of patterned light beams are the same as the spatial resolution of a captured image.

The light-emitting unit 401 irradiates the subject 21 with a plurality of patterned light beams during an exposure period of a captured image of one frame. Specifically, the light-emitting unit 401 generates one captured image as illustrated in FIG. 13 by irradiating the subject 21 with a plurality of patterned light beams sequentially during an exposure period. That is to say, in the present embodiment, the temporal resolutions of the patterned light beams are higher than the temporal resolution (frame rate) of the captured image.

FIG. 14 illustrates timing of irradiation of the subject 21 with patterned light beams and image capturing according to the present embodiment. For example, as illustrated in FIG. 14, the light-emitting unit 401 irradiates the subject 21 with patterned light beams of three irradiation patterns "a", "b", and "c" during the exposure period of a captured image. With this, the captured image generated by the imaging device 310 includes information on the three irradiation patterns "a", "b", and "c". It should be noted that the three irradiation patterns "a", "b", and "c" are mutually different in light and dark pattern, and are, for example, patterns illustrated in (a) through (c) in FIG. 13.

In the present embodiment, the light-emitting unit 401 irradiates the subject 21 with a plurality of sets, each of which is a plurality of patterned light beams. The plurality of sets are mutually different at least in light and dark patterns of the plurality of patterned light beams or in the order of the plurality of patterned light beams.

For example, three irradiation patterns 403 as illustrated in (a) through (c) of FIG. 13 which are mutually different in light and dark pattern make up one set. The storage unit 202 stores a plurality of mutually different sets.

The details of the operation of the light-emitting unit 401 will be described later. It should be noted that the light-emitting unit 401 is implemented by, for example, a light-emitting element such as an LED or an organic EL element, and a driver circuit which drives the light-emitting element.

[2-1-3. Imaging device]

As illustrated in FIG. 12, the imaging device 310 is different from the imaging device 110 according to Embodiment 1 in that the imaging device 310 includes a timing control unit 311 instead of the timing control unit 111.

The timing control unit 311 includes, for example, a nonvolatile memory in which a program is stored, a volatile memory which is a temporary storage region for running a program, an input-output port, and a processor which runs a program. The timing control unit 311 controls timing of image capturing performed by the imaging unit 112. The timing control unit 311, for example, controls the start and end of exposure performed by the imaging unit 112, in synchronization with emission of a plurality of patterned light beams.

Specifically, the timing control unit 311 controls the start and end of exposure performed by the imaging unit 112 such that a plurality of patterned light beams are emitted during one exposure period. Accordingly, while the imaging unit 112 in Embodiment 1 generates one captured image for one patterned light beam, the imaging unit 112 in the present embodiment generates one captured image for a plurality of patterned light beams.

In the present embodiment, as described earlier, the subject 21 is irradiated with a plurality of sets, each of which is a plurality of patterned light beams. The imaging unit 112 generate a plurality of captured images corresponding to the plurality of sets by capturing images of the subject 21 irradiated with each of the plurality of sets.

[2-1-4. Image processing device]

As illustrated in FIG. 12, the image processing device 320 is different from the image processing device 120 according to Embodiment 1 in that the image processing device 320 includes a timing detecting unit 322 and a super-resolution processing unit 325 instead of the position detecting unit 122 and the super-resolution processing unit 125. Furthermore, the storage unit 123 stores irradiation patterns 324 instead of the irradiation patterns 124. The irradiation patterns 324 are identical to the irradiation patterns 403 stored in the storage unit 202 of the illumination apparatus 400.

The timing detecting unit 322 detects timing of change in patterned light beams. Specifically, the timing detecting unit 322 detects a difference in time between timing of start of exposure and timing of change in the patterned light beams (for example, t = 0 through 2). For example, when the timing control unit 311 and the light-emitting unit 401 use a common clock, the timing detecting unit 322 detects timing of change in the patterned light beams by referring to the common clock. The common clock is a network timing protocol (NTP) server, for example.

Alternatively, the timing detecting unit 322 may detect timing of change in the patterned light beams based on a captured image. In this case, it is only necessary that the timing detecting unit 322 perform, on the temporal axis, the same processing as the detection of an irradiated region described in Embodiment 1. For example, it is possible to use flashing light which flashes at timing known by the image processing device 320.

Specifically, the timing detecting unit 322 detects timing of a moiré pattern generated in a captured image of the subject irradiated with the flashing light. By associating in advance timing when a moiré pattern is generated and timing of change in patterned light beams, the timing detecting unit 322 detects timing of change in the patterned light beams.

The super-resolution processing unit 325 generates high-resolution images by performing super-resolution processing on captured images. In the present embodiment, the super-resolution processing unit 325 generates high-resolution images based on the timing detected by the timing detecting unit 322. The high-resolution images have a temporal resolution (frame rate) higher than the temporal resolution of the captured images.

The super-resolution processing unit 325 generates high-resolution images by applying the super-resolution processing method described in Embodiment 1 to the temporal axis. The details of the processing will be described later.

[2-2. Operation]

FIG. 15 is a flow chart illustrating an operation of the super-resolution processing system 20 (super-resolution processing method) according to the present embodiment.

First, the subject 21 is irradiated with patterned light beams a plurality of times and image capturing is performed (S20). Specifically, the illumination apparatus 400 irradiates the subject 21 with a set of mutually different patterned light beams a plurality of times, and the imaging device 310 generates captured images of the subject 21 irradiated with each of the plurality of sets, by performing image capturing in synchronization with the irradiation of the subject 21 with each of the plurality of sets.

FIG. 16 illustrates timing of irradiation of the subject 21 with patterned light beams and image capturing according to the present embodiment. In the present embodiment, the illumination apparatus 400 irradiates the subject 21 with separable patterned light beams of different wavelengths for each set. For example, the plurality of sets correspond to a set of red patterned light beams, a set of green patterned light beams, and a set of blue patterned light beams.

As the red set, the light-emitting unit 401 emits, for example, patterned light beams of three irradiation patterns "a", "b", and "c" repeatedly in this order. As the green set, the light-emitting unit 401 emits, for example, patterned light beams of three irradiation patterns "d", "e", and "f" repeatedly in this order. As the blue set, the light-emitting unit 401 emits, for example, patterned light beams of three irradiation patterns "c", "f", and "b" repeatedly in this order.

It should be noted that the irradiation patterns included in the plurality of sets may partially overlap one another. For example, the irradiation patterns "b" and "c" are included in the red set and the blue set. Here, it is only necessary that the patterned light beams of the same irradiation patterns are not emitted at the same timing. For example, when two sets include the same irradiation patterns, it is only necessary that the order in which the patterned light beams of one set are emitted is different from the order in which the patterned light beams of the other set are emitted.

The imaging device 310 generates a captured image by capturing an image of the subject 21 in synchronization with emission of a set of patterned light beams. Here, three captured images are generated as illustrated in FIG. 16 and FIG. 17.

FIG. 17 illustrates an example of irradiation patterns of patterned light beams and captured images according to the present embodiment. As illustrated in FIG. 17, each of the three captured images includes information on different irradiation patterns.

It should be noted that image capturing may be repeatedly performed while causing the subject 21 to make the same movement. FIG. 18 illustrates another example of timing of irradiation of the subject 21 with patterned light beams and image capturing according to the present embodiment.

As illustrated in FIG. 18, the subject 21 repeats movement M. In keeping with the subject 21 repeating the movement M, the illumination apparatus 400 irradiates the subject 21 with sets of patterned light beams, and the imaging device 310 captures images of the subject 21 irradiated with the sets of patterned light beams. With this, a plurality of captured images can be generated in the same manner as in the case of FIG. 16. For example, the three captured images illustrated in FIG. 17 are generated.

Next, the timing detecting unit 322 detects timing of the irradiation of the subject 21 with patterned light beams (S22). Specifically, the timing detecting unit 322 detects, for each of the plurality of captured images, timing of the irradiation of the subject 21 with patterned light beams. For example, the timing detecting unit 322 detects timing of change in patterned light beams by referring to the common clock.

Next, the super-resolution processing unit 325 increases the frame rate of the captured images (S24).

For example, the super-resolution processing unit 325 calculates an image f which minimizes a function E(f) shown in (Equation 2) below, so as to generate the calculated image f as a high-resolution image (high-frame rate image). It should be noted that the irradiation patterns 403 with which the subject 21 is irradiated and the irradiation patterns 324 used by the super-resolution processing unit 325 are identical. That is to say, the super-resolution processing unit 325 can use, as known information, the irradiation patterns 403 with which the subject 21 is irradiated.

[Math. 2]

(Equation 2)

$$E(f) = \sum_{k,x,y,t'} \left| (\downarrow 3)[b(x,y,t) \otimes \{f(x,y,t)(L_k(x,y,t) + L_0)\}] - g_k(x,y,t') \right|^2 + \lambda \sum_{x,y,t} |\Delta f(x,y,t)|$$

In (Equation 2), x and y are coordinates representing two-dimensional positions of a high-resolution image. t is a time of a high-resolution image. t' is a time of a captured image (low-frame rate image). f(x, y, t) is a high-resolution image to be calculated. b(x, y, t) is a point spread function (PSF) representing spatiotemporal blur caused by image capturing, including temporal blur caused by exposure.

$L_k(x, y, t)$ is an irradiation pattern 324 (that is, an irradiation pattern 403). k is a number of an irradiation pattern 324, and is specifically information for identifying (a), (b) or (c) illustrated in FIG. 13. $L_0$ is information which indicates lighting by which the surrounding environment is commonly irradiated. $L_0$ can be obtained by, for example, capturing an image without the illumination apparatus 400 emitting patterned light beams.

$g_k(x, y, t')$ is a captured image generated when the subject 21 is irradiated with a patterned light beam having an irradiation pattern $L_k$. $\lambda$ is a predetermined constant. $\Delta$ is Laplacian. ($\downarrow$3) represents sampling performed by thinning out by 1/3. It should be noted that in the present embodiment, the temporal resolution (frame rate) of a high-resolution image (patterned light beam) is three times as large as the frame rate of a captured image, and thus the sampling is performed by thinning out by 1/3. The number for the sampling is determined based on a difference in temporal resolution between the high-resolution image and the captured image.

Next, the output unit 126 outputs high-resolution images generated by the super-resolution processing unit 125 (S26). FIG. 19 illustrates high-resolution images according to the present embodiment. As illustrated in FIG. 19, high-resolution images having temporal resolutions higher than the temporal resolutions of the captured images are generated.

That is to say, high-frame rate images are generated.

[2-3. Advantageous Effects etc.]

As described above, according to the super-resolution processing method according to the present embodiment, in (i) above, the subject is irradiated with a plurality of patterned light beams during an exposure period of a captured image of one frame.

With this, an image having a high temporal resolution can be generated from a captured image having a low temporal resolution. For example, a high-frame rate image can be generated even when a low-frame rate camera is used.

For example, in the present embodiment, in (i) above, the subject 21 is irradiated with a plurality of sets, each of the plurality of sets being a plurality of patterned light beams, in (ii) above, a plurality of captured images corresponding to the plurality of sets are generated by capturing images of the subject 21 irradiated with each of the plurality of sets, and the plurality of sets are mutually different at least in light and dark patterns of the plurality of patterned light beams or in order of the plurality of patterned light beams.

With this, for example, the frame rate can be further increased by increasing the number of patterned light beams included in each set.

[Other embodiments]

As described above, embodiments are presented as examples of the techniques disclosed in the present application. However, the techniques according to the present disclosure are not limited to the foregoing embodiments, and can also be applied to embodiments obtained through changes, substitution, addition, omission, etc., to the above embodiment as appropriate. Furthermore, it is possible to make a new embodiment by combining the structural elements described in each of the above embodiments.

In light of this, the following describes other embodiments.

For example, although each of the above embodiments describes an example in which a captured image is a luminance image, the present disclosure can be also applied to a color image. For example, by performing the same processing as described above on a color component or a chrominance component, a high-resolution image can be generated.

Furthermore, for example, although Embodiment 1 describes an example in which the irradiated region 13 is detected by detecting the reference object 14 from the captured image 12, the present disclosure is not limited to this example. For example, assuming a plurality of irradiated region candidates, a high-resolution image candidate may be generated for each of the plurality of irradiated region candidates, and then a likely image may be selected as a high-resolution image from among a plurality of high-resolution image candidates. That is to say, the image processing device 120 need not include the position detecting unit 122.

Specifically, the super-resolution processing unit 125 performs (c) generating, for each of a plurality of candidate regions which are a plurality of candidates for an irradiated region in each of the plurality of captured images 12, a high-resolution image candidate having a spatiotemporal resolution higher than the spatiotemporal resolution of the captured image, using a pixel of the candidate region in the captured image, the irradiated region being a region irradiated with a patterned light beam, and (d) determining one high-resolution image candidate as the high-resolution image among a plurality of high-resolution image candidates generated.

For example, the super-resolution processing unit 125 evaluates each of the plurality of high-resolution image candidates using validity measures. As the validity measure, it is possible to use, for example, an integrated value of spatial smoothness (second-order differential value) or continuity (first-order differential value) of a pixel value as a property that a natural image statistically has. For example, the validity measure is the item including $\lambda$ in (Equation 1). Among the plurality of high-resolution image candidates, a high-resolution image candidate whose item including $\lambda$ is smallest can be generated as a high-resolution image.

Similarly, although Embodiment 2 describes an example in which the timing detecting unit 322 detects timing of change in patterned light beams, the present disclosure is not limited to this example. For example, assuming a plurality of timing candidates, a high-resolution image candidate may be generated for each of the plurality of timing candidates, and then a likely image may be selected as a high-resolution image from among a plurality of high-resolution image candidates. That is to say, the image processing device 320 need not include the timing detecting unit 322. The above-described validity measure or the like can be used as the method for selecting a likely image, for example.

As described above, embodiments are presented as examples of the techniques according to the present disclosure. The accompanying drawings and the detailed description are provided for this purpose.

Therefore, the structural elements described in the accompanying drawings and the detailed description may include, not only structural elements essential to solving the problem, but also structural elements that are not essential to solving the problem, in order to provide examples of the aforementioned techniques. As such, these non-essential structural elements should not be deemed essential due to the mere fact that they are included in the accompanying drawings and the detailed description.

Moreover, since the embodiments above show examples of the techniques according to the present disclosure, various modifications, replacements, additions, omissions, or the like can be made within the scope of the claims or in a scope equivalent to the scope of the claims.

[Industrial Applicability]

The super-resolution processing method and the related technologies according to the present disclosure can be used for, for example, an imaging device which performs high-resolution image capturing such as a monitoring camera, a microscope, and an inspection system.

[Reference Signs List]

| | |
|---|---|
| 10, 20 | super-resolution processing system |
| 11, 21 | subject |
| 12 | captured image |
| 13 | irradiated region |
| 14 | reference object |
| 100, 300 super- | resolution processing apparatus |
| 110, 310 | imaging device |
| 111, 311 | timing control unit |
| 112 | imaging unit |
| 120, 320 | image processing device |
| 121 | obtaining unit |
| 122 | position detecting unit |
| 123, 202 | storage unit |
| 124, 203, 324, 403 | irradiation pattern |
| 125, 325 | super-resolution processing unit |
| 126 | output unit |
| 200, 400 | illumination apparatus |
| 201, 401 | light-emitting unit |
| 322 | timing detecting unit |

**Claims**

1. A super-resolution processing method for increasing a resolution of a captured image, the super-resolution processing method comprising:

   (i) irradiating a subject with a patterned light beam having a spatiotemporal resolution higher than a spatiotemporal resolution of the captured image, the spatiotemporal resolution being at least one of spatial resolution and temporal resolution;
   (ii) generating the captured image by capturing an image of the subject irradiated with the patterned light beam; and
   (iii) generating a high-resolution image having a spatiotemporal resolution higher than the spatiotemporal resolution of the captured image, using the captured image.

2. The super-resolution processing method according to claim 1,
   wherein, in (i), the subject is irradiated with a plurality of patterned light beams which are mutually different in light and dark pattern.

3. The super-resolution processing method according to claim 2,
   wherein the plurality of patterned light beams have spatial resolutions higher than a spatial resolution of the captured image, and
   in (ii), a plurality of captured images corresponding to the plurality of patterned light beams are generated by capturing, in synchronization with irradiation of the subject with the plurality of patterned light beams, images of the subject irradiated with each of the plurality of patterned light beams.

4.  The super-resolution processing method according to claim 3,
    wherein (iii) includes:

    (a) detecting an irradiated region in each of the plurality of captured images at an accuracy higher than the spatial resolution of the captured image, the irradiated region being a region irradiated with a patterned light beam; and
    (b) generating the high-resolution image using pixels included in the irradiated region detected in the captured image.

5.  The super-resolution processing method according to claim 4,
    wherein, in (a), the irradiated region is detected by detecting, from the captured image, a reference object whose position relative to the irradiated region is fixed.

6.  The super-resolution processing method according to claim 5,
    wherein, in (a), the irradiated region is detected by detecting a moiré pattern generated in the captured image due to the reference object.

7.  The super-resolution processing method according to claim 6,
    wherein, in (i), a region different from the irradiated region and included in the captured image is also irradiated with a high-frequency periodic pattern as the reference object.

8.  The super-resolution processing method according to any one of claims 4 to 7,
    wherein, in (b), the high-resolution image is generated by calculating, on a per unit region basis, a pixel value of the high-resolution image based on a pixel value of a pixel including a unit region in the irradiated region of each of the plurality of captured images, the unit region being a smallest unit of light and dark patterns of the plurality of patterned light beams.

9.  The super-resolution processing method according to claim 3, wherein (iii) includes:

    (c) generating, for each of a plurality of candidate regions which are a plurality of candidates for an irradiated region in each of the plurality of captured images, a high-resolution image candidate having a spatiotemporal resolution higher than the spatiotemporal resolution of the captured image, using a pixel of the candidate region in the captured image, the irradiated region being a region irradiated with a patterned light beam; and
    (d) determining one high-resolution image candidate as the high-resolution image among a plurality of high-resolution image candidates generated.

10. The super-resolution processing method according to claim 2,
    wherein, in (i), the subject is irradiated with the plurality of patterned light beams during an exposure period of the captured image of one frame.

11. The super-resolution processing method according to claim 10,
    wherein, in (i), the subject is irradiated with a plurality of sets, each of the plurality of sets being a plurality of patterned light beams,
    in (ii), a plurality of captured images corresponding to the plurality of sets are generated by capturing images of the subject irradiated with each of the plurality of sets, and
    the plurality of sets are mutually different at least in light and dark patterns of the plurality of patterned light beams or in order of the plurality of patterned light beams.

12. The super-resolution processing method according to any one of claims 1 to 11,
    wherein the patterned light beam is a random patterned light beam in which light and dark regions are randomly arranged.

13. A super-resolution processing method for increasing a resolution of a captured image, the super-resolution processing method comprising
    generating a high-resolution image having a spatiotemporal resolution higher than a spatiotemporal resolution of

EP 3 267 676 A1

the captured image, using the captured image generated by capturing an image of a subject irradiated with a patterned light beam having a spatiotemporal resolution higher than the spatiotemporal resolution of the captured image, the spatiotemporal resolution being at least one of spatial resolution and temporal resolution.

14. A super-resolution processing apparatus which increases a resolution of a captured image, the super-resolution processing apparatus comprising:

an image capturing unit configured to generate the captured image by capturing an image of a subject irradiated with a patterned light beam having a spatiotemporal resolution higher than a spatiotemporal resolution of the captured image, the spatiotemporal resolution being at least one of spatial resolution and temporal resolution; and an image processing unit configured to generate a high-resolution image having a spatiotemporal resolution higher than the spatiotemporal resolution of the captured image, using the captured image generated by the image capturing unit.

15. A super-resolution processing apparatus which increases a resolution of a captured image, the super-resolution processing apparatus comprising
an image processing unit configured to generate a high-resolution image having a spatiotemporal resolution higher than a spatiotemporal resolution of the captured image, using the captured image generated by capturing an image of a subject irradiated with a patterned light beam having a spatiotemporal resolution higher than the spatiotemporal resolution of the captured image, the spatiotemporal resolution being at least one of spatial resolution and temporal resolution.

16. A super-resolution processing system comprising:

the super-resolution processing apparatus according to claim 14 or 15; and an illumination apparatus which irradiates the subject with the patterned light beam.

FIG. 1

EP 3 267 676 A1

FIG. 2

11

FIG. 3

8 pixels

8 pixels

FIG. 4

EP 3 267 676 A1

# FIG. 5

203

| | Irradiation pattern | Captured image |
|---|---|---|
| (a) | 32 × 32 | 8 × 8 |
| (b) | | |
| (c) | | |

# FIG. 6

```
           ┌─────────────┐
           │    Start    │
           └─────────────┘
                  │
                  ▼
  ┌──────────────────────────────────┐   S10
  │ Irradiate subject with patterned │
  │ light beams and perform image    │
  │ capturing                        │
  └──────────────────────────────────┘
                  │
                  ▼
  ┌──────────────────────────────────┐   S12
  │ Detect irradiated region         │
  │ in captured image                │
  └──────────────────────────────────┘
                  │
                  ▼
  ┌──────────────────────────────────┐   S14
  │ Increase resolution of image     │
  │ of irradiated region             │
  └──────────────────────────────────┘
                  │
                  ▼
  ┌──────────────────────────────────┐   S16
  │ Output high-resolution image     │
  └──────────────────────────────────┘
                  │
                  ▼
           ┌─────────────┐
           │     End     │
           └─────────────┘
```

# FIG. 7

# FIG. 8A

# FIG. 8B

FIG. 9

FIG. 10

EP 3 267 676 A1

# FIG. 11

| Movement of subject | | Captured image |
|---|---|---|
| t = 0 | | |
| t = 1 | | |
| t = 2 | | |

FIG. 12

# FIG. 13

403

| | Irradiation pattern | Captured image |
|---|---|---|
| (a) | | |
| (b) | | |
| (c) | | |

FIG. 14

FIG. 15

```
         ┌──────────┐
         │  Start   │
         └────┬─────┘
              │
              ▼
┌────────────────────────────────────────────┐   S20
│ Irradiate subject with patterned light beams a │
│ plurality of times and perform image capturing │
└────────────────────┬───────────────────────┘
                     │
                     ▼
┌────────────────────────────────────────────┐   S22
│ Detect timing of irradiation with            │
│ patterned light beams                        │
└────────────────────┬───────────────────────┘
                     │
                     ▼
┌────────────────────────────────────────────┐   S24
│          Increase frame rate                 │
└────────────────────┬───────────────────────┘
                     │
                     ▼
┌────────────────────────────────────────────┐   S26
│       Output high-resolution images          │
└────────────────────┬───────────────────────┘
                     │
                     ▼
              ┌──────────┐
              │   End    │
              └──────────┘
```

# FIG. 16

# FIG. 17

| Irradiation pattern | Captured image |
|---|---|
| abc | |
| def | |
| cfb | |

# FIG. 18

# FIG. 19

| High-resolution image | |
|---|---|
| t = 0 | |
| t = 1 | |
| t = 2 | |

# EP 3 267 676 A1

<table>
<tr><td colspan="2" style="text-align:center">INTERNATIONAL SEARCH REPORT</td><td>International application No.<br>PCT/JP2016/000413</td></tr>
</table>

**A.  CLASSIFICATION OF SUBJECT MATTER**

*H04N5/232*(2006.01)i, *G06T3/40*(2006.01)i, *H04N1/387*(2006.01)i, *H04N5/238*(2006.01)i

According to International Patent Classification (IPC) or to both national classification and IPC

**B.  FIELDS SEARCHED**

Minimum documentation searched (classification system followed by classification symbols)
H04N5/232, G06T3/40, H04N1/387, H04N5/238

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 11-242189 A  (Olympus Optical Co., Ltd.), 07 September 1999 (07.09.1999), entire text; all drawings & US 6239909 B1 entire text; all drawings | 1-16 |
| A | JP 2011-095745 A  (Carl Zeiss MicroImaging GmbH), 12 May 2011 (12.05.2011), entire text; all drawings & US 2011/0267688 A1 entire text; all drawings & EP 2317362 A1          & DE 102010049627 A | 1-16 |

☐  Further documents are listed in the continuation of Box C.        ☐  See patent family annex.

| | |
|---|---|
| *  Special categories of cited documents: | "T"  later document published after the international filing date or priority date and not in conflict with the application but cited to understand the principle or theory underlying the invention |
| "A"  document defining the general state of the art which is not considered    to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 06 April 2016 (06.04.16) | 19 April 2016 (19.04.16) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **GUOAN ZHENGA et al.** The ePetri dish, an on-chip cell imaging platform based on subpixel perspective sweeping microscopy (SPSM). *Proceedings of the National Academy of Sciences,* 2011, vol. 108 (41), 16889-16894

- **S. FARSIU ; D. ROBINSON ; M. ELAD ; P. MILANFAR.** Fast and Robust Multi-frame Super-resolution. *IEEE Transactions on Image Processing,* October 2004, vol. 13 (10), 1327-1344